# EUROPÄISCHE PATENTSCHRIFT

(11) **EP 2 013 507 B1**
(45) Veröffentlichungstag und Bekanntmachung des Hinweises auf die Patenterteilung: **23.11.2016**
(21) Anmeldenummer: 07723567.9
(22) Anmeldetag: 24.03.2007
(51) Int. Cl.: F16D 65/12, F16D 3/06

(54) **ZAHNKUPPLUNG MIT FEDERUNG UND ELEKTROMOTOR MIT BREMSE DIE ÜBER EINE ZAHNKUPPLUNG ANGEBUNDEN IST**
TOOTHED COUPLING WITH SPRING ARRANGEMENT AND ELECTRIC MOTOR WITH BRAKE WHICH IS CONNECTED BY MEANS OF A TOOTHED COUPLING
Accouplement denté avec suspension à ressort et moteur électrique avec frein qui est relié par le biais d'un accouplement denté

(30) Priorität: 24.04.2006 DE 102006019453
(43) Veröffentlichungstag der Anmeldung: 14.01.2009
(73) Patentinhaber: SEW-EURODRIVE GmbH & Co. KG, 76646 Bruchsal (DE)
(72) Erfinder: ASCHOFF, Stefan, 64297 Darmstadt (DE); FLÖRCHINGER, Gerhard, 67376 Harthausen (DE)
(86) Internationale Anmeldenummer: PCT/EP2007/002620
(87) Internationale Veröffentlichungsnummer: WO 2007/121815

(56) Entgegenhaltungen:
- EP-A1- 0 130 883
- WO-A-01/98681
- WO-A-2004/025133
- DE-C2- 19 855 025
- DE-U1- 8 815 843
- FR-A- 1 374 262
- US-A- 5 186 287
- US-A- 5 437 351
- US-A1- 2006 027 428

## Beschreibung

Die Erfindung bezieht sich auf eine Zahnkupplung mit Federung und einen Elektromotor. Eine an einem Elektromotor angebaute Federdruckbremse, die elektromagnetisch gelüftet wird, ist mit dem Motor durch eine Zahnkupplung verbunden.

Bei Elektromotoren werden oft elektromagnetisch lüftbare Bremsen eingesetzt. Diese Bremsen umfassen einen Belagträger mit Bremsbelag, wobei der Belagträger von der Rotorachse angetrieben wird. Zur Drehmomentübertragung an den Belagträger wird oft eine Mitnehmerverzahnung ausgebildet. Ein Beispiel für eine solche Bremse findet sich im Band 4 (Ausgabe 03/96) der Veröffentlichungsreihe 'Praxis der Antriebstechnik' der Firma SEW aus Bruchsal.

Der Belagträger des Bremsbelages besitzt dabei eine Innenverzahnung, der Mitnehmer eine Außenverzahnung, wobei diese beiden Verzahnungen im wesentlichen eine Zahnkupplung darstellen.

Die Verzahnungen werden dabei derart ausgelegt, dass ein Ineinanderfügen bei der Erstmontage oder Wartung durch einfaches Stecken ausführbar ist. Dazu ist ein anfangs wenigstens kleines Spiel nötig. Während des Betriebes werden die Verzahnungen nach und nach verschlissen. Daher vergrößert sich das Spiel der Zahnkupplung zunehmend mit der Standzeit.

Ein wichtiger nachteiliger Effekt ist dabei, dass bei Änderung der Richtung des Drehmomentflusses vom Mitnehmer zum Belagträger, also einem Wechsel der anliegenden Zahnflanken, ein Geräusch entsteht. Dieses Geräusch kann störende Größenordnungen erreichen. Die zugehörige Drehmoment-Winkel-Kennlinie ist über einen gewissen Winkelbereich hinweg Null, also drehmomentfrei. Diese Eigenschaft der spielfreien Zahnkupplung muss zur Reduzierung des Geräusches bzw. zur Vermeidung geändert werden. Dazu sind folgende Vorgehensweisen bekannt.

Aus DE 19646493 ist ein O-Ring aus einem Elastomer wie Gummi bekannt, wobei dieses Elastomer zwischen die Verzahnungen in eine dafür vorgesehene Nut eingebracht wird. Das Elastomer verhindert ein freies Spiel der Verzahnungen gegeneinander, da bei relativen Verdrehungen eine vorwiegend elastische Federkraft auftritt.

Da die Federkraft von Gummi jedoch sehr klein ist, ist die lärmmindernde Wirkung nicht ausreichend. Außerdem treten bei Scheibenbremsen hohe Temperaturen auf. Daher kann Gummi in solchen Fällen seine Elastizität völlig verlieren.

Aus der Gebrauchsmusteranmeldung DE 78 25 113 U1 ist eine Ringfeder bekannt, die die Drehmoment-Winkel-Kennlinie in ähnlicher Weise modifiziert und daher auch eine ähnliche Wirkung hat, insbesondere eine lärmmindernde Wirkung. Die Fertigung der dort beschriebenen Führungsnut ist aufwendig und kostspielig.

Eine Weiterentwicklung der Zentrierung des Belagträgers durch eine Feder wurde im Patent DE 198 55 025 C2 dargestellt. Die Feder befindet sich dort auf dem Mitnehmerritzel. Dies ist einerseits aufwendig zu fertigen, andererseits ist ein verschleißbedingter Austausch der Feder nur durch einen größeren Eingriff möglich. Dabei ist insbesondere zu beachten, dass die Verzahnung des Mitnehmers aus gehärteten Stahl-Zähnen fertigbar ist, die somit nur geringem Verschleiß unterworfen sind. Die Innen-Verzahnung ist aus weicherem Material gefertigt. Somit muss bei Wartung der Bremse einerseits das federnde Bauteil an der Mitnehmerverzahnung, also am inneren schwer zugänglichen Teil, und andererseits der Belagträger, also das äußere Teil, getauscht werden.

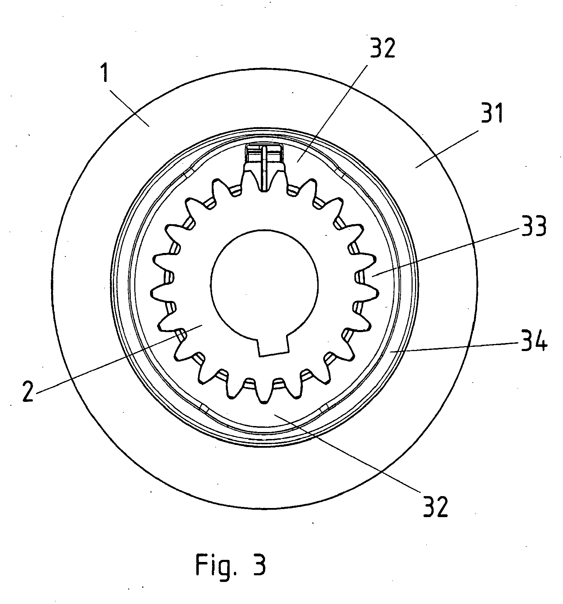

Nachteilig ist bei der DE 198 55 025 C2 auch, dass alle Zahnköpfe der Innenverzahnung gekürzt ausgeführt werden müssen, damit die Bügelfeder nach Figur 3 der DE 198 55 025 C2 genügend Platz findet.

Bei Ausführung des Belagträgers aus Metall kann Korrosion auftreten. Dabei ist die Sicherheit reduziert, weil anfallender Rost von korrodierenden Belagträgern die Bremskraft vermindert.

Weitere Zahnkupplungen mit Federung sind der US 2006/0027428 bekannt.

Der Erfindung liegt die Aufgabe zugrunde, eine Federung für eine Zahnkupplung weiterzubilden, bei der eine einfache kostengünstige Fertigung und Wartung ermöglicht ist.

Erfindungsgemäß wird die Aufgabe gelöst bei der Federung nach den in Anspruch 1 angegebenen Merkmalen. Bei dem Elektromotor wird die Aufgabe nach dem Anspruch 15 gelöst.

Insbesondere ist die Federung aus einer oder mehreren Untereinheiten, den federnden Bauteilen, ausbildbar. Des weiteren weist jedes federnde Bauteil mindestens eine Spange auf. Die Auslegung der Innenverzahnung des Belagträgers ist derart ausgelegt, dass die federnden Bauteile einbringbar sind.

Von Vorteil ist dabei, dass ein Kunststoffteil als Belagträger verwendbar ist und somit Korrosion vermeidbar ist. Somit ist die Sicherheit erhöht.

Von Vorteil ist dabei, dass der Belagträger als einstückiges Kunststoffteil ausführbar ist, das bereits bei der Herstellung des Rohteils die für das federnde Bauteil notwendige Vorbereitung erhalten kann. Also ist es ermöglicht, dass die zur Aufnahme des federnden Bauteils notwendige Lücke ohne nachfolgende Zusatzbearbeitung, sondern als Formvorgabe für das Kunststoffteil herstellbar ist. Außerdem sind auch Ausnehmungen ohne Zusatzaufwand ausformbar, wobei die Ausnehmungen zur Aufnahme des federnden Bauteils verwendbar sind.

Vorteilig ist also bei der Erfindung, dass bereits bestehende Bremsen mit geringem Aufwand mit der erfindungsgemäßen Vorrichtung ausstattbar sind. Insbesondere ist ein Austausch des Mitnehmers vermeidbar, da der Belagträger zusammen mit dem federnden Bauteil gleichzeitig austauschbar ist. Somit sind die Fertigung und Wartung einfach und kostengünstig ausführbar.

Wenn also die metallische harte Mitnehmerverzahnung das Kunststoffteil wegen Drehmomentschwankungen verschleißt, muss nur der Belagträger ausgetauscht werden. Dabei befindet sich das federnde Bauteil am Belagträger und wird somit ohne Zusatzaufwand in die Bremse eingebracht.

Dabei sind also bestehende Bremsen einfach nachrüstbar, indem die erfindungsgemäße Belagträgerscheibe auf das bestehende Mitnehmerritzel aufsteckbar ist, wobei hier auch störanfällige Metallbelagbremsen durch solche mit sichereren organischen Belägen ausgetauscht werden können.

Wesentlicher weiterer Vorteil der Erfindung ist auch, dass die Zahnköpfe der Verzahnungen nicht gekürzt ausgeführt werden müssen wegen der Federung, sondern gemäß anderer Kriterien auslegbar sind, insbesondere dem In-Eingriff-Stehen mit der entsprechenden Verzahnung.

In einer weiteren erfindungsgemäßen Ausführungsform wird das federnde Bauteil in eine Zahnlücke in der Innenverzahnung der Belagträgerscheibe eingebracht, wobei das federnde Bauteil als Spange ausgeführt wird. Die Verzahnung der Belagträgerscheibe wird hierfür in einfacher Weise modifiziert, indem der Lückengrund oder Fußkreis tiefer gelegt wird, also auf einem größeren Durchmesser der Innenverzahnung. Die Federbügel verlaufen im Zahnfuß der Innenverzahnung und berühren die Außenverzahnung des Mitnehmers am Zahnkopf.

In einer weiteren erfindungsgemäßen Ausführungsform wird in der Innenverzahnung des Belagträgers ein Zahn ausgespart. In diese Lücke wird das federnde Bauteil eingebracht. Hierbei muss jedoch darauf geachtet werden, dass die durch das Entfernen eines Zahns entstehende Unwucht ausgeglichen wird, was in einfacher Weise durch Formgebung des Kunststoffteils vorsehbar ist.

In einer weiteren erfindungsgemäßen Ausführungsform wird das federnde Bauteil aus einem federnden Blech gefertigt, welches an der Belagträgerscheibe am Ort der Lücke vernietbar ist. Vorteil ist dabei, dass das federnde Bauteil fest mit der Belagträgerscheibe verbindbar ist.

In einer weiteren erfindungsgemäßen Ausführungsform wird das federnde Bauteil bereits während der Sinterung in die Belagträgerscheibe eingearbeitet. Vorteil ist dabei, dass bei der Konstruktion federnden Bauteils keine zusätzliche Halterung berücksichtigt werden muss.

In einer weiteren erfindungsgemäßen Ausführungsform ist die Federung, umfassend federnde Bauteile, aus Federdraht gefertigt. Von Vorteil ist dabei die einfache Handhabung und kostengünstige Fertigung. Außerdem ist auch ein Einsatz und Betrieb bei hohen Temperaturen möglich.

In einer weiteren erfindungsgemäßen Ausführungsform ist der Federdraht ein vergüteter Stahldraht, beispielsweise gemäß DIN 17 224 oder DIN 17 223. Von Vorteil ist dabei die gute Verfügbarkeit auf dem Markt und die kostengünstige Beschaffung. Insbesondere ist der Federdraht ein patentiert-gezogener Federdraht, beispielsweise gemäß DIN 17 223.

In einer weiteren erfindungsgemäßen Ausführungsform ist die Federung aus Gummi. Von Vorteil ist dabei die kostengünstige Herstellung.

In einer weiteren erfindungsgemäßen Ausführungsform klammert sich das federnde Bauteil an vorderer und hinterer Stirnseite der Verzahnung fest. Von Vorteil ist dabei die Fixierung in Rotorachsenrichtung.

In einer weiteren erfindungsgemäßen Ausführungsform klammert sich das federnde Bauteil mit seinen Klammerbereichen an der linken und rechten Flanke eines Zahnes fest. In Weiterbildung können aber auch Flanken verschiedener benachbarter oder voneinander beabstandeter Zähne verwendet werden. Von Vorteil ist dabei die Fixierung in Umfangsrichtung.

Die weiteren Ausführungsformen und Vorteile der Zahnkupplung ergeben sich aus den Unteransprüchen.

In einer weiteren Ausführungsform ist die erfindungsgemäß ausgeführte Zahnkupplung Bremsbelagträgerscheibe aus Kunststoff. Für den Elektromotor ergeben sich Ausführungsformen

### Bezugszeichenliste

- 1: Belagträgerscheibe
- 2: Mitnehmer
- 3: Verzahnungsbereich der Zahnkupplung
- 4: Zahnkopf der Innenverzahnung
- 5: Zahnfuß der Außenverzahnung
- 6: federndes Bauteil
- 7: Ankerscheibe
- 8: Elektromagnet
- 9: Federn

- 21: ausgenommener Zahn
- 22: Vertiefung
- 23: Verbindung

- 31: Bremsbelag
- 32: Wuchtgewicht
- 33: Kranzbereich
- 34: Belagträgerbereich

- 41 a,b,c: Bügelbereich
- 42 a,b,c: Klammerbereich
- 43: Stützbereich

Die Erfindung wird nun anhand von Abbildungen näher erläutert:

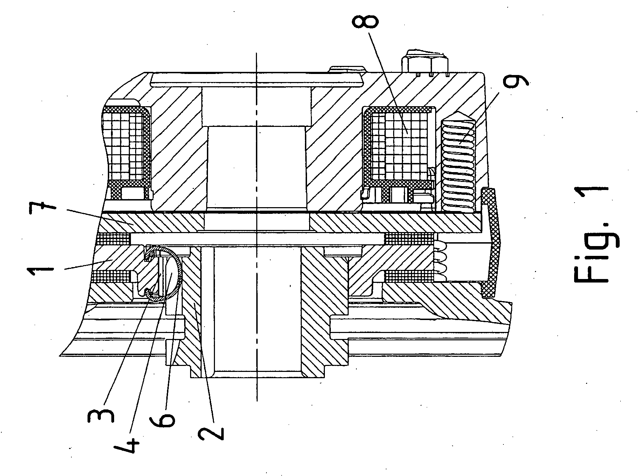

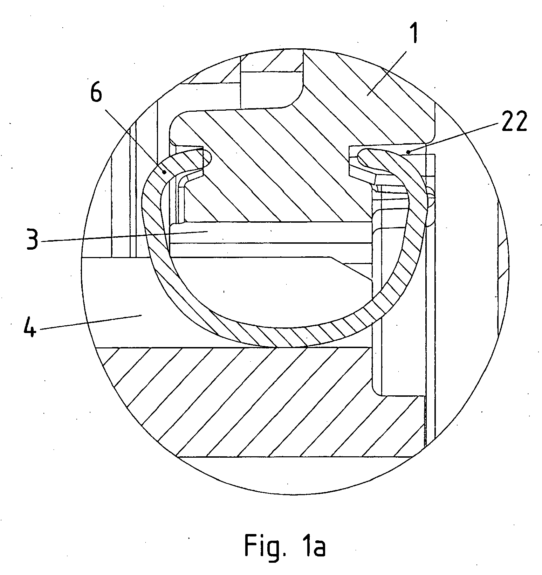

In der Figur 1 ist eine elektromagnetisch betätigbare Bremse für einen Elektromotor gezeigt. Bei Bestromung des Elektromagneten 8 wird die Ankerscheibe 7 gegen die Kraft der Federn 9 angezogen. Nach Abschalten des Stromes wird die Ankerscheibe 7 von den Federn 9 gegen den Bremsbelag der Belagträgerscheibe 1 gedrückt und somit die Bremskraft erzeugt. Die Belagträgerscheibe 1 wirkt beidseitig und wird daher verschiebbar auf dem Mitnehmer 2 angebracht. Somit stellt sich beim Bremsen eine gleichmäßige Wirkung der beiden Bremsflächen ein. Außerdem kann sich die Belagträgerscheibe 1 von den zugehörigen feststehenden Bremsflächen bei Bestromung des Elektromagneten 8 lösen und freistellen.

Die Verbindung und Drehmomentübertragung von Belagträgerscheibe 1 mit Mitnehmer 2 erfolgt durch den Verzahnungsbereich 3 der Zahnkupplung. Die zugehörigen Verzahnungen sind als mathematisch zueinander passende Evolventenverzahnungen ausgeführt. Dabei werden die Zahnweiten so mit einem Aufmaß bzw. einem Abmaß beaufschlagt, dass ein gewisses Flankenspiel vorhanden ist. Daher können die Verzahnungen des Mitnehmers 2 und der Belagträgerscheibe 1 ohne großen Kraftaufwand ineinander in axialer Richtung gefügt werden.

Aufgrund von Drehmomentschwankungen an der Motorwelle entstehen beim Betrieb des Motors Rasselgeräusche durch das Flankenspiel, die bei längerer Standzeit durch ein Ausschlagen der Flanken an der Belagträgerscheibe verstärkt werden. Die Umkehrung des Drehmomentenflusses kann beim Ein- und Ausschalten der Bremse ebenso auftreten wie auch beim Betrieb des Elektromotors infolge von lastseitig oder antriebsseitig auf den Rotor aufgebrachten Drehmomentenschwankungen. Diese Drehmomentenschwankungen entsprechen den Schwankungen des Energieflusses in den 'Speicher für Rotationsenergie' hinein, umfassend die Belagträgerscheibe 1.

Durch das Einbringen der erfindungsgemäßen Federung werden die Rasselgeräusche und ein dadurch bedingtes Ausschlagen des Bremsbelagträgers unterbunden. Dazu wird aus der Innenverzahnung ein Zahn ausgenommen und an der entstehenden Lücke eine Aufnahme für das federnde Bauteil 6 eingearbeitet. Somit wird Platz geschaffen für das Einbringen der erfindungsgemäßen Federung. Die so entstehende Lücke ist also weiter als die Summe von zwei Zahnlücken der Verzahnung. Insbesondere entspricht die Lückenweite der Summe der Zahnbreite des ausgenommenen Zahnes und der Weite von zwei Zahnlücken der Verzahnung. Also ist die Lücke weiter als die Zahnbreite des ausgenommenen Zahnes.

Bei weiteren erfindungsgemäßen Ausführungsbeispielen wird die Lücke noch mehr aufgeweitet.

*Bei weiteren erfindungsgemäßen Ausführungsbeispielen wird statt der Lücke eine Kopfkürzung an mindestens einem Zahn ausgeführt, der dem obengenannten ausgenommenen Zahn entspricht. Bei geeigneter Auslegung der Verzahnung ist somit genügend viel Platz vorsehbar zum Einbringen des federnden Bauteils. Dabei ist die Kopfkürzung derart ausgeführt, dass beim axialen Aufschieben der Belagträgerscheibe auf den Mitnehmer das federnde Bauteil elastisch ausgelenkt wird. Der bei Kopfkürzung verbleibende Restzahn bietet vorteiligerweise Stabilität für die Belagträgerscheibe, insbesondere im Bereich der Aufnahme des federnden Bauteils.*

Die Federung besteht aus federnden Bauteilen, die man auch als Klammern oder Spangen, bezeichnen kann. *Bei weiteren erfindungsgemäßen Ausführungsbeispielen* sind mehrere solche Spangen an verschiedenen Stellen einbringbar.

In der Figur 1 ist nur eine einzige solche Spange 6 eingezeichnet.

Die Spangen 6 sind derart geformt, dass sie auf die Belagträgerscheibe 2 aufgeklipst oder aufgesteckt werden können. Sie sitzen dann während der weiteren Montage genügend fest, haben also eine genügende Selbstfixierung.

Die Spange 6 besitzt in der gezeichneten Form der Figur 1 einen Bügelbereich 41, der mittels zweier Klammerbereiche 42 an den Stirnseiten, also axial gesehen links und rechts, der Belagträgerscheibe eingehängt wird, also formschlüssig verbunden in den Vertiefungen 22, indem das federnde Bauteil zum Einhängen elastisch verformt ist, insbesondere leicht. Der Bügelbereich 41 wird beim axialen Aufstecken der Belagträgerscheibe elastisch verformt und berührt den Zahnfuß der Außenverzahnung 5 des Mitnehmers. Nach Einbringen der Spange 6 übt der Bügelbereich 41 somit eine Federkraft auf den Zahnfuß der Außenverzahnung 5 aus. Diese Kraft bewirkt, dass die seitlich positionierten Flanken der Verzahnungen 3 aufeinander zugeschoben werden und satt anliegen. Beim Einbringen von nur einer Spange sind die satt anliegenden Zahnflanken um etwa einen Viertelkreis am Umfang der Mitnehmerverzahnung zur Spange versetzt. Die Belagträgerscheibe ist also bei Verwendung nur eines einzigen federnden Bauteils am Umfang nicht zentriert in der Achse des Mitnehmers.

Dadurch ist ein freies Spiel der Flanken verhindert. Nur bei großem Kraftaufwand sind noch winzige Verdrehungen möglich. Die Drehmoment-Winkel-Kennlinie ist entsprechend geändert. Das Rasselgeräusch ist somit unterbunden.

In weiteren erfindungsgemäßen Ausführungsbeispielen werden eine oder mehrere Spangen mit nur einem Bügelbereich verwendet. In anderen erfindungsgemäßen Ausführungsbeispielen werden eine oder mehrere Spangen mit mehreren Bügelbereichen verwendet.

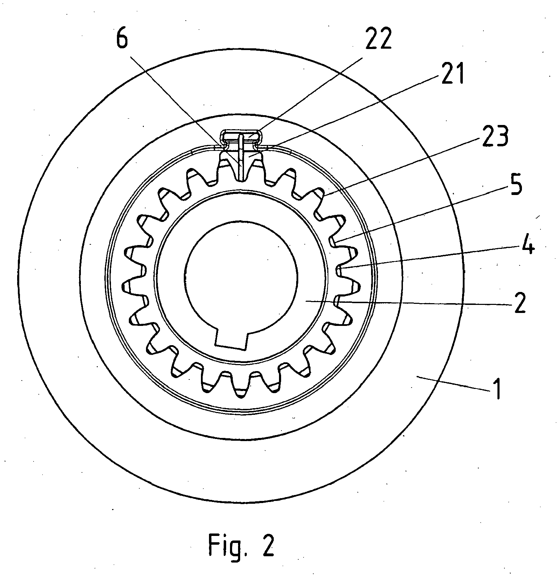

In der Figur 2 ist eine Ansicht des Mitnehmers und der Belagträgerscheibe aus der Richtung der Rotorachse gezeigt. Die Spange 6 liegt in der Lücke des ausgenommenen Zahns 21 der Belagträgerscheibe 1. Die Bügelbereiche 41 des federnden Bauteils 6 ragen in den Zahnfuß der Außenverzahnung 5. Die Klammerbereiche 42 krallen sich in eine Vertiefung 22 in der vorderen und hinteren Stirnseite der Belagträgerscheibe 1 mit Verzahnung 3 ein.

In der Figur 3 ist eine Ansicht der Belagträgerscheibe 1 mit dem Bremsbelag gezeigt. Aus der Innenverzahnung 4 wurde ein Zahn ausgespart 21 um dort das zentrierende federnde Bauteil einzubringen. Die seitliche Vertiefung 22 an der Stelle des ausgenommenen Zahnes dient zur Aufnahme des federnden Bauteils. Die Figur 3 zeigt die erfindungsgemäße Ausführung der Belagträgerscheibe mit den zusätzlichen Wuchtgewichten 32 direkt bei und gegenüber der Aussparung des Zahnes 21. Dabei ist der axial hervorstehende Kranzbereich 33 an seinem äußeren Umfang eigentlich zylinderförmig ausgeführt. Jedoch sind die Wuchtgewichte 32 als Materialbereiche realisiert, die Abweichungen von dieser Zylinderform darstellen.

Der Belagträgerbereich 34 schließt sich daran an, wobei er eine axial geringere Dicke aufweist als der Kranzbereich 33.

Die Wuchtgewichte nach Figur 3 sind derart angeordnet, dass auch Unwucht-Momente höherer Ordnung ausgewuchtet sind.

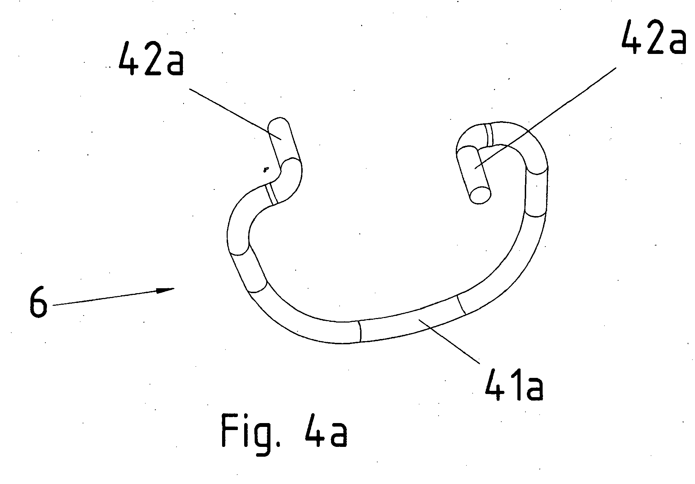

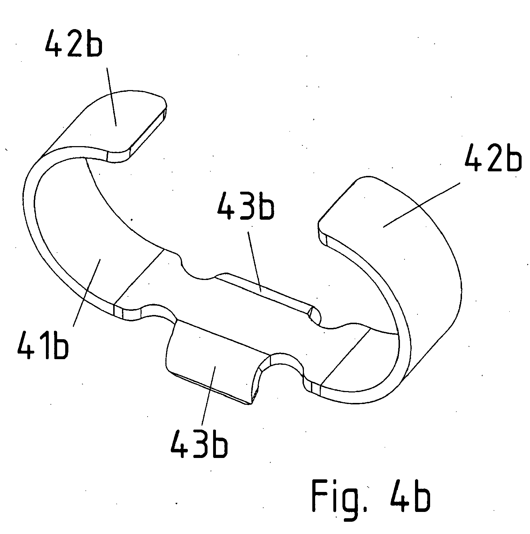

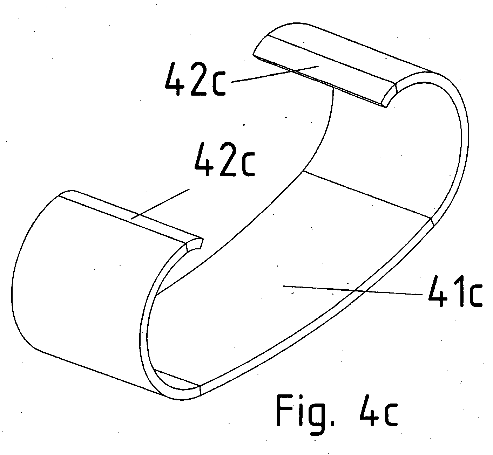

In den Figuren 4a, 4b und 4c sind die erfindungsgemäßen federnden Bauteile der Federung gezeigt. Diese Bauteile können auch als Spangen bezeichnet werden.

Die Spange in Figur 4 a zeigt einen Bügelbereich 41 a und zwei Klammerbereiche 42 a. Nach Einbringen in die Lücke der Innenverzahnung krallen sich die Klammerbereiche 42 a in die Vertiefung 22 ein. Der Bügelbereich 41a drückt mit seinem höchsten Punkt gegen den Zahnfuß der Außenverzahnung 5 des Mitnehmers in radial nach innen zeigender Richtung.

Durch das Verkrallen des federnden Bauteils ist eine Fixierung bis zum Einbau der Belagträgerscheibe gewährleistet. Mit den Klammerbereichen 42 a krallt sich das federnde Bauteil an der vorderen und hinteren Stirnseite fest. In der in Figur 4 a gezeigten Ausführung ist das federnde Bauteil derart geformt, dass der Klammerbereich an der vorderen Stirnseite mit Rechtsbiegung in den Bügelbereich und an der hinteren Seite mit Linksbiegung in den entsprechenden Bügelbereich übergeht. Dadurch wird eine Zentrierung des Bügelbereiches innerhalb der Lücke erreicht, was den Bügel mittig in den Zahnfuß der gegenüberliegenden Zahnlücke der Mitnehmerverzahnung platziert zentriert.

Die Spangen 6 bestehen aus Federdraht. Es sind verschiedene Federdrähte, wie beispielsweise patentiert-gezogener oder vergüteter Federstahldraht nach DIN 17 223 oder DIN 17 224 verwendbar.

Das federnde Bauteil das in Figur 4b gezeigt ist, ist aus einem Federblech gefertigt. Es weist einen Bügelbereich 42 b. Die Breite entspricht im Wesentlichen den Abmessungen der Vertiefungen 22, in welchen sich die Klammern 42b einkrallen. Im Bügelbereich 41 b befinden sich zwei Stützen 43, die die Federkraft auf die Flanken der Mitnehmerverzahnung übertragen. Somit drückt der erste Stützbereich 43 auf die linke Flanke eines Zahnes und der zweite Stützbereich auf die rechte Flanke des benachbarten Zahnes der Mitnehmerverzahnung. Dabei sind auch die Stützbereiche 43 etwas elastisch verformbar, um sich zwischen die beiden Zähne der Mitnehmerverzahnung einzuspannen.

Figur 4c zeigt ebenfalls ein federndes Bauteil aus einem Blechstreifen. Der Bügelbereich 42 c füllt die Lücke breiter aus als der Federdraht nach Figur 4 a. Die Federkraft wirkt in dieser Ausführungsform auf einen Kopf des entsprechenden Zahnes der Mitnehmerverzahnung. Bei alternativer Ausführung wirkt die Federkraft auf zwei oder mehr Köpfe der Mitnehmerverzahnung, wobei der Bügel entsprechend breit ausgeführt ist.

Erfindungsgemäß sind auch Ausführungsbeispiele, bei denen die Spange aus Plastik oder Gummi anstatt aus Metall gefertigt wird. Dabei wird temperaturbeständiges Material gewählt.

## Patentansprüche

1. Zahnkupplung mit Federung, insbesondere bei einer elektromagnetisch betätigbaren Bremse für einen Elektromotor,
wobei die Zahnkupplung ein innenverzahntes äußeres Teil und ein außenverzahntes inneres Teil umfasst,
wobei die beiden Teile in axialer Richtung gegeneinander verschiebbar sind,
wobei die Federung mindestens ein federndes Bauteil 6 umfasst
wobei eine der Verzahnungen mindestens eine erste Lücke aufweist,
wobei das federnde Bauteil 6 zumindest teilweise in der ersten Lücke vorgesehen ist,
wobei die Verzahnung, in deren Lücke das federnde Bauteil vorgesehen ist, eine Innenverzahnung ist,
wobei das federnde Bauteil 6 eine Spange ist,
wobei die Spange derart geformt ist, dass sie auf das innenverzahnte äußere Teil aufgeklipst oder aufgesteckt werden kann,
wobei die Spange einen, Bügelbereich 41a,b,c und zwei klammerbereiche 42a,b,c besitzt, wobei der Bügelbereich 41a,b,c jeweils in die Lücke, insbesondere eine einzige, der Innenverzahnung einbringbar ist,
**dadurch gekennzeichnet, dass**
die erste Lücke weiter ist als die anderen Lüdkenweiten der Verzahnung, insbesondere am Teilkreis, und dass die zwei Klammerbereiche axial beidseits des Innenverzahnten äußeren Teils, insbesondere an den Stirnseiten, also axial links und rechts, einer Belagträgerscheibe 1, in Vertiefungen des innenverzahnten äußeren Teils einhängbar sind,
wobei mit dem Bügelbereich 41a,b,c in eingehängter Position eine Federkraft auf einen Zahnfuß der Außenverzahnung 5 ausübbar ist.

2. Zahnkupplung nach einem der vorangegangenen Ansprüche,
**dadurch gekennzeichnet, dass**
am Umfang mehr als ein federndes Bauteil 6 vorgesehen ist, wobei die federnden Bauteile um mindestens einen Zahn voneinander beabstandet sind.

3. Zahnkupplung nach einem der vorangegangenen Ansprüche,
**dadurch gekennzeichnet, dass**
das federnde Bauteit 6 zusammenwirkt mit dem Zahnkopf der anderen, in Eingriff stehenden Verzahnung, insbesondere zum Aufbringen einer Kraft in radialer Richtung auf den Zahnkopf.

4. Zahnkupplung nach einem der vorangegangenen Ansprüche,
**dadurch gekennzeichnet, dass**
jedes federnde Bauteil 6 mindestens einen Bügelbereich 41a,b,c, insbesondere zum Erzeugen von Federkraft, und einen Klammerbereich 42a,b,c, insbesondere zum Einklemmen in eine formschlüssige Verbindung, aufweist.

5. Zahnkupplung nach einem der vorangegangenen Ansprüche,
**dadurch gekennzeichnet, dass**
die Verzahnungen einer Belagträgerscheibe 1 derart dimensioniert und ausgelegt ist, dass der Bügelbereich jeweils zwischen die Verzahnungen einbringbar ist,

6. Zahnkupplung nach einem der vorangegangenen Ansprüche,
**dadurch gekennzeichnet, dass**
Wuchtgewichte 32 zum Korrigieren von durch Ausnehmungen und/oder Vertiefungen erzeugten Unwuchten vorgesehen sind.

7. Zahnkupplung nach einem der vorangegangenen Ansprüche,
**dadurch gekennzeichnet, dass**
Wuchtgewichte 32 durch Formabweichungen, insbesondere von einer Zylinderform, vorgesehen sind.

8. Zahnkupplung nach einem der vorangegangenen Ansprüche,
**dadurch gekennzeichnet, dass**
der Bügelbereich den entsprechend zugeordneten Zahnkopf der Außenverzahnung berührt.

9. Zahnkupplung nach einem der vorangegangenen Ansprüche,
**dadurch gekennzeichnet, dass**
der Bügelbereich derart ausgebildet ist, dass sie eine Federkraft zwischen Zahnfuß der innenverzahnung und Zahnkopf der Außenverzahnung ausübt.

10. Zahnkupplung nach einem der vorangegangenen Ansprüche,
**dadurch gekennzeichnet, dass**
der Bügelbereich die entsprechend zugeordneten Zahnflanken der Außenverzahnung berührt.

11. Zahnkupplung nach einem der vorangegangenen Ansprüche,
**dadurch gekennzeichnet, dass**
der Bügelbereich derart ausgebildet ist, dass sie eine Federkraft zwischen Zahnfuß der Innenverzahnung und Zahnflanken der Außenverzahnung ausübt.

12. Zahnkupplung nach einem der vorangegangenen Ansprüche,
**dadurch gekennzeichnet, dass**
die federnden Bauteile 6 aus Federdraht bestehen,
und/oder dass
die federnden Bauteile aus vergütetem Stahldraht bestehen,
und/oder dass
die federnden Bauteile aus patentiert-gezogenem Stahldraht bestehen.

13. Zahnkupplung nach einem der vorangegangenen Ansprüche,
**dadurch gekennzeichnet, dass**
die federnden Bauteile 6 aus Elastomer, also Gummi, Plastik, Kunststoff oder dergleichen, bestehen
und/oder dass
das federnde Bauteil jeweils derart geformt ist, dass es mindestens einen Bügelbereich aufweist, der derart gebogen ist, dass er nach Einbringen in die Verzahnung eine Federkraft in im Wesentlichen radialer Richtung der Verzahnung ausbildet,
und/oder dass
das federnde Bauteil jeweils derart geformt ist, dass beim und nach dem Einbringen in die Verzahnung Federkräfte zur Selbstfixierung ausgebildet sind,
und/oder dass
das federnde Bauteil jeweils derart geformt ist, dass Federkräfte zur Selbstfixierung, insbesondere wie bei einer Klammer, zwischen vorderer und hinterer Stirnseite der Verzahnung ausgebildet sind,
und/oder dass
das federnde Bauteil derart geformt ist, dass es in eine Lücke in der Innenverzahnung einnietbar ist.

14. Zahnkupplung nach einem der vorangegangenen Ansprüche,
**dadurch gekennzeichnet, dass**
das federnde Bauteil durch Sinterung mit einer Bdagträgerscheibe 1 verbunden ist, insbesondere das federnde Bauteil in die Belagträgerscheibe eingesintert ist,
und/oder dass
die Verzahnungen Evolventenverzahnungen mit oder ohne Kopfrücknahme, Fußkorrekturen und Flankenlinienkorrekturen sind.

15. Elektromotor mit Bremse
wobei
eine Zahnkupplung nach einem der vorangegangenen Ansprüche zwischen Belagträger als innenverzahntes äußeres Teil und Mitnehmerverzahnung als außenverzahntes inneres Teil vorgesehen ist,
insbesondere wobei
die Federung derart ausgeführt ist, dass die Zahnkupplung auch bei von einem den Elektromotor versorgenden Umrichter Drehmomentschwankungen spielfrei überträgt.

## Claims

1. Toothed coupling with spring arrangement, in particular in an electromagnetically actuable brake for an electric motor, wherein the toothed coupling comprises an internally-toothed outer part and an externally-toothed inner part,
wherein the two parts are moveable relative to one another in the axial direction,
wherein the spring arrangement comprises at least one resilient component 6,
wherein one of the toothings has at least a first gap, wherein the resilient component 6 is provided at least partly in the first gap,
wherein the toothing, in the gap of which the resilient component is provided, is an internal toothing,
wherein the resilient component 6 is a clasp,
wherein the clasp is shaped in such a way that it can be clipped or plugged onto the internally-toothed outer part, wherein the clasp has a bow region 41a,b,c and two clamp regions 42a,b,c,
wherein the bow region 41a,b,c is in each case insertable into the gap, in particular only gap, of the internal toothing, **characterised in that**
the first gap is wider than the other gap widths of the toothing, in particular on the pitch circle, and **in that** the two clamp regions can be hung axially one on either side of the internally-toothed outer part into recesses of the internally-toothed outer part, in particular at the end sides, i.e. axially on the left and right, of a lining carrier disc 1,
wherein with the bow region 41a,b,c in hung-in position a spring force is exertable on a tooth base of the external toothing 5.

2. Toothed coupling according to one of the preceding claims,
**characterised in that**
more than one resilient component 6 is provided at the circumference, wherein the resilient components are spaced from one another by at least one tooth.

3. Toothed coupling according to one of the preceding claims,
**characterised in that**
the resilient component 6 cooperates with the tooth tip of the other engaged toothing, in particular for applying a force on the tooth tip in the radial direction.

4. Toothed coupling according to one of the preceding claims,
**characterised in that**
each resilient component 6 has at least one bow region 41a,b,c, in particular for generating spring force, and a clamp region 42a,b,c, in particular for clamping in a form-fitting connection.

5. Toothed coupling according to one of the preceding claims,
**characterised in that**
the toothings of a lining carrier disc 1 are dimensioned and designed in such a way that the bow region is insertable in each case between the toothings.

6. Toothed coupling according to one of the preceding claims,
**characterised in that**
balancing weights 32 for correcting imbalances generated by cutouts and/or recesses are provided.

7. Toothed coupling according to one of the preceding claims,
**characterised in that**
balancing weights 32 by shape deviations, in particular from a cylinder shape, are provided.

8. Toothed coupling according to one of the preceding claims,
**characterised in that**
the bow region is in contact with the correspondingly associated tooth tip of the external toothing.

9. Toothed coupling according to one of the preceding claims,
**characterised in that**
the bow region is formed in such a way that it exerts a spring force between tooth base of the internal toothing and tooth tip of the external toothing.

10. Toothed coupling according to one of the preceding claims,
**characterised in that**
the bow region is in contact with the correspondingly associated tooth flanks of the external toothing.

11. Toothed coupling according to one of the preceding claims,
**characterised in that**
the bow region is formed in such a way that it exerts a spring force between tooth base of the internal toothing and tooth flanks of the external toothing.

12. Toothed coupling according to one of the preceding claims,
**characterised in that**
the resilient components 6 are composed of spring wire,
and/or **in that**
the resilient components are composed of tempered steel wire,
and/or **in that**
the resilient components are composed of patented-drawn steel wire.

13. Toothed coupling according to one of the preceding claims,
**characterised in that**
the resilient components 6 are composed of elastomer, i.e. rubber, plastic, synthetic material or the like,
and/or **in that**
the resilient component is in each case shaped in such a way that it has at least one bow region which is bent in such a way that after insertion into the toothing it develops a spring force in substantially the radial direction of the toothing,
and/or **in that**
the resilient component is in each case shaped in such a way that, during and after insertion into the toothing, spring forces are developed for self-fixing,
and/or **in that**
the resilient component is in each case shaped in such a way that spring forces are developed for self-fixing, in particular as with a clamp, between the front and rear end side of the toothing,
and/or **in that**
the resilient component is in each case shaped in such a way that it can be riveted into a gap in the internal toothing.

14. Toothed coupling according to one of the preceding claims,
**characterised in that**
the resilient component is connected to a lining carrier disc 1 by sintering,
in particular the resilient component is sintered into the lining carrier disc,
and/or **in that**
the toothings are involute toothings with or without tip relief, base corrections and tooth trace corrections.

15. Electric motor with brake
wherein
a toothed coupling according to one of the preceding claims is provided between lining carrier as internally-toothed outer part and driver toothing as externally-toothed inner part,
in particular wherein
the spring arrangement is designed in such a way that the toothed coupling transmits free from backlash also in the event of torque fluctuations by a converter supplying the electric motor.

## Revendications

1. Accouplement denté à suspension élastique équipant, en particulier, un frein actionnable en mode électromagnétique et destiné à un moteur électrique,
ledit accouplement denté comprenant une partie extérieure à denture intérieure et une partie intérieure à denture extérieure,
les deux parties pouvant coulisser l'une par rapport à l'autre dans la direction axiale,
la suspension élastique incluant au moins un élément structurel élastique (6),
l'une des dentures présentant au moins un premier entredent,
ledit élément structurel élastique (6) étant prévu, au moins en partie, dans ledit premier entredent,
sachant que la denture, dans l'entredent de laquelle l'élément structurel élastique est prévu, est une denture intérieure,
ledit élément structurel élastique (6) se présentant comme un crampon,
ledit crampon étant configuré de façon telle qu'il puisse être clipsé ou emboîté sur la partie extérieure à denture intérieure,
ledit crampon possédant une région arquée (41a, b, c) et deux zones d'agrippage (42a, b, c),
ladite région arquée (41a, b, c) pouvant être respectivement insérée dans l'entredent, notamment unique, de ladite denture intérieure,
**caractérisé par le fait que**
le premier entredent est plus large que les autres discontinuités de la denture, en particulier au niveau du cercle primitif de référence ;
et **par le fait que**
les deux zones d'agrippage peuvent être accrochées dans des creusures de la partie extérieure à denture intérieure, axialement de part et d'autre de ladite partie extérieure à denture intérieure, en particulier au niveau des faces extrêmes, c'est-à-dire axialement à gauche et à droite d'un disque (1) porte-garnitures,
sachant qu'une force élastique peut être appliquée à un pied de dent de la denture extérieure (5) par la région arquée (41a, b, c) en position accrochée.

2. Accouplement denté selon l'une des revendications précédentes,
**caractérisé par le fait que**
plus d'un élément structurel élastique (6) est prévu sur le pourtour, les éléments structurels élastiques étant mutuellement distants de la valeur d'au moins une dent.

3. Accouplement denté selon l'une des revendications précédentes,
**caractérisé par le fait que**
l'élément structurel élastique (6) coopère avec le sommet de la dent de l'autre denture en prise, notamment en vue d'appliquer une force audit sommet de dent dans la direction radiale.

4. Accouplement denté selon l'une des revendications précédentes,
**caractérisé par le fait que**
chaque élément structurel élastique (6) comporte au moins une région arquée (41a, b, c), notamment en vue d'engendrer une force élastique, et une zone d'agrippage (42a, b, c) notamment en vue de l'enchâssement dans une liaison par complémentarité de formes.

5. Accouplement denté selon l'une des revendications précédentes,
**caractérisé par le fait que**
les dentures d'un disque (1) porte-garnitures sont dimensionnées et agencées de telle sorte que la région arquée puisse être respectivement insérée entre lesdites dentures.

6. Accouplement denté selon l'une des revendications précédentes,
**caractérisé par le fait que**
des contrepoids (32) sont prévus pour corriger des balourds engendrés par des évidements et/ou des creusures.

7. Accouplement denté selon l'une des revendications précédentes,
**caractérisé par le fait que**
des contrepoids (32) sont matérialisés par des écarts de forme, notamment par rapport à une forme cylindrique.

8. Accouplement denté selon l'une des revendications précédentes,
**caractérisé par le fait que**
la région arquée est en contact avec le sommet de dent de la denture extérieure qui lui est associé de façon correspondante.

9. Accouplement denté selon l'une des revendications précédentes,
**caractérisé par le fait que**
la région arquée est réalisée de manière à appliquer une force élastique entre un pied de dent de la denture intérieure et un sommet de dent de la denture extérieure.

10. Accouplement denté selon l'une des revendications précédentes,
**caractérisé par le fait que**
la région arquée est en contact avec les flancs des dents de la denture extérieure qui lui sont associés de façon correspondante.

11. Accouplement denté selon l'une des revendications précédentes,
**caractérisé par le fait que**
la région arquée est réalisée de manière à appliquer une force élastique entre un pied de dent de la denture intérieure et des flancs de dents de la denture extérieure.

12. Accouplement denté selon l'une des revendications précédentes,
**caractérisé par le fait que**
les éléments structurels élastiques (6) consistent en du fil à ressorts,
et/ou que
lesdits éléments structurels élastiques consistent en du fil d'acier trempé,
et/ou que
lesdits éléments structurels élastiques consistent en du fil d'acier à tréfilage breveté.

13. Accouplement denté selon l'une des revendications précédentes,
**caractérisé par le fait que**
les éléments structurels élastiques (6) consistent en un élastomère, c'est-à-dire en du caoutchouc, en une matière plastique, en une matière synthétique ou en un matériau analogue,
et/ou que
l'élément structurel élastique est respectivement configuré de manière à présenter au moins une région arquée cintrée de façon telle qu'elle développe, après insertion dans la denture, une force élastique pour l'essentiel dans la direction radiale de ladite denture, et/ou que
ledit élément structurel élastique est respectivement configuré de manière que des forces élastiques soient développées au cours et à l'issue de l'insertion dans la denture, en vue de l'autoblocage à demeure,
et/ou que
ledit élément structurel élastique est respectivement configuré de façon telle que des forces élastiques soient développées en vue de l'autoblocage à demeure, entre des faces extrêmes antérieure et postérieure de la denture, en particulier comme dans une pince de serrage,
et/ou que
ledit élément structurel élastique est configuré de façon telle qu'il puisse être intégré, par rivetage, dans un entredent réservé dans la denture intérieure.

14. Accouplement denté selon l'une des revendications précédentes,
**caractérisé par le fait que**
l'élément structurel élastique est relié par frittage à un disque (1) porte-garnitures,
ledit élément structurel élastique étant notamment intégré par frittage dans ledit disque porte-garnitures,
et/ou que
les dentures sont des dentures en développante avec ou sans dégagement de têtes, corrections de pieds et corrections de lignes de flancs.

15. Moteur électrique équipé d'un frein,
dans lequel
un accouplement denté, conforme à l'une des revendications précédentes, est prévu entre un porte-garnitures matérialisant une partie extérieure à denture intérieure, et une denture d'entraînement matérialisant une partie intérieure à denture extérieure,
sachant notamment que
la suspension élastique est réalisée de telle sorte que ledit accouplement denté transmette des fluctuations de couples de rotation, sans aucun jeu, également en présence d'un inverseur alimentant ledit moteur électrique.
